Europäisches Patentamt

European Patent Office

Office européen des brevets

(19)

(11) Veröffentlichungsnummer : **0 152 906 B1**

(12) **EUROPÄISCHE PATENTSCHRIFT**

(45) Veröffentlichungstag der Patentschrift :
19.07.89

(51) Int. Cl.⁴ : **G 01 K 17/08, F 24 D 19/10**

(21) Anmeldenummer : **85101538.8**

(22) Anmeldetag : **13.02.85**

(54) **Vorrichtung zum Messen der von einem Heizkörper abgegebenen Wärmemenge und zum Steuern des den Heizkörper durchströmenden Fluidstromes.**

(30) Priorität : 17.02.84 DE 3405835
17.02.84 DE 3405840
17.02.84 DE 3405774

(43) Veröffentlichungstag der Anmeldung :
28.08.85 Patentblatt 85/35

(45) Bekanntmachung des Hinweises auf die Patenterteilung : 19.07.89 Patentblatt 89/29

(84) Benannte Vertragsstaaten :
AT BE CH DE FR GB IT LI NL

(56) Entgegenhaltungen :
EP--A-- 0 018 566
DE--A-- 1 965 938
US--A-- 3 354 901

(73) Patentinhaber : **MPE Produkt Plan AG**
**Hohlstrasse 216**
**CH-8004 Zürich (CH)**

**Lampert, Heinz**
**Fuchsbühelstrasse 50**
**CH-9470 Buchs (CH)**

**Lanker, Willi**
**In der Gandstrasse 10**
**CH-8126 Zumikon (CH)**

(72) Erfinder : **Lampert, Heinz**
**Fuchsbühelstrasse 50**
**CH-9470 Buchs (CH)**
Erfinder : **Scheiwiller, Bruno**
**Rütlistrasse 12**
**CH-8400 Winterthur (CH)**

## Beschreibung

Die Erfindung bezieht sich auf eine Vorrichtung zum Messen der von einem Heizkörper an einen Raum abgegebenen Wärmemenge und zum gleichzeitigen Steuern des den Heizkörper durchströmenden, als Wärmeträger dienenden Fluidstromes zwecks Regelung der Raumtemperatur, bestehend aus einem Volumenstromregler zum Durchlassen eines konstanten Fluidstromes und einem von einem Signalgeber, z. B. einem Raumthermostaten über ein Steuerventil vorgesteuerten und von der Energie des Fluidstromes geschalteten Auf-Zu-Ventil zum Sperren oder Durchlassen des Fluidstromes sowie je einem Temperaturfühler für den Vor- und Rücklauf des Heizkörpers und einer Elektronikeinheit, die die Wärmemenge durch Integration der in eine elektrische Grösse umgewandelten jeweiligen Temperaturdifferenzwerte während der Oeffnungszeiten des Auf-Zu-Ventils erfasst.

Eine derartige Vorrichtung ist in der EP-A-0 018 566 beschrieben. Die bekannte Vorrichtung löst zwar erstmals die Aufgabe des Steuerns eines Fluidstroms und gleichzeitiges Messens der abgegebenen Wärmemenge, ist aber noch zu ungenau und aufwendig, insbesondere in fertigungstechnischer und installationsmässiger Hinsicht. Das Regelglied des Volumenstromreglers besteht hier aus einem in einem zylindrischen Rohr gleitbaren Dosierkolben, wodurch es insbesondere bei stark verschmutztem Heizwasser zu Fehlern und Abweichungen infolge Korrosion und Schmutzablagerungen und schliesslich sogar zu einem Festklemmen der gleitenden Regelteile kommen kann.

Auch wird bei einem solchen Kolbenregler infolge der Reibung ein hoher Wirkdruck benötigt, so dass hohe Pumpendrücke erforderlich sind. Auch das mit einem beweglichen Ventilkolben versehene Auf-Zu-Ventil kann bei verunreinigtem Heizwasser leicht klemmen und beim Oeffnen und Schliessen dieses Auf-Zu-Ventils können Leckverluste auftreten, wodurch Messfehler entstehen.

Der Erfindung liegt die Aufgabe zugrunde, eine eingangs genannte Vorrichtung zu schaffen, die in der Praxis sicher funktioniert und vor allem schmutzunempfindlich, langzeitstabil und genau ist und mit einem geringen Wirkdruck und einem minimalen Verbrauch an elektrischer Energie auskommt.

Die Lösung dieser Aufgabe wird bei einer solchen Vorrichtung gemäss den Merkmalen des Anspruchs 1 darin gesehen, dass der Volumenstromregler mindestens zwei in Kaskade geschaltete Regelglieder umfasst, von denen jedes eine Steuerkammer und eine von dieser durch eine unter Federdruck stehende Membran getrennte, vom Fluidstrom durchflossene Durchflussregelkammer mit einem von der momentanen Auslenkung der Membran abhängigen Durchflussquerschnitt aufweist, wobei die Fluidzuführleitung einerseits direkt mit der Steuerkammer des ersten Regelgliedes und andererseits über Mittel zur Druckabfallerzeugung mit dem Eingang der Durchflussregelkammer des ersten Regelgliedes und der Steuerkammer des zweiten Regelgliedes verbunden ist und dass dem Steuerventil des Auf-Zu-Ventils ein bistabiles Stellglied zugeordnet ist, welches den Ventilkörper des Steuerventils über ein nur eine minimale elektrische Energie benötigendes elektromagnetisches Schaltglied umschaltet, das mit dem Signalgeber und der Elektronikeinheit verbunden ist.

Dadurch, dass die Regelglieder des Volumenstromreglers zur Regelung des Durchflusses Membranventile aufweisen, werden gleitende Regelteile im Fluidstrom sicher vermieden, so dass keine hohe Reibung oder durch Verschmutzung verursachte Verklemmung der Regelteile mehr erfolgen kann.

Ein derartiges Regelglied kann mit sehr kleinen Staudrücken in einem grossen Wirkungsbereich arbeiten und besteht aus nur wenigen einfachen Bauteilen. Durch das dem Steuerventil zugeordnete besondere bistabile Stellglied wird der bewegliche Ventilkörper des Steuerventils ohne elektrischen Energieverbrauch über die Halteglieder sicher in seinen beiden Endlagen gehalten, so dass das elektromagnetische Schaltglied des bistabilen Stellgliedes nur die Umschaltung des kleinen Steuerventilkörpers selbst durchzuführen hat. Zum Umschalten des Auf-Zu-Ventils selbst wird die Eigenenergie des Fluids ausgenutzt, so dass nur eine sehr geringe elektrische Energie zur Auslösung des Stellimpulses für die Umschaltung des Auf-Zu-Ventils benötigt wird und ein langfristiger Betrieb des Gerätes mit nur einer kleinen Hilfsbatterie möglich ist, die gleichzeitig auch die Elektronikeinheit versorgt.

Durch die Verbindung des elektromagnetischen Schaltgliedes mit dem Signalgeber und der Elektronikeinheit kann das Ansprechen des elektromagnetischen Schaltgliedes insbesondere von einem Raumtemperaturfühler durch Vergleich zwischen dem eingestellten Sollwert und dem Istwert auch in Verbindung mit einer Zeitsteuerung leicht geregelt werden.

Wird auch das Auf-Zu-Ventil gemäss dem Merkmal des Anspruchs 2 als Membranventil ausgebildet und werden die beiden Regelglieder des Volumenstromreglers zusammen mit dem Membranventil des Auf-Zu-Ventils hintereinander in einem gemeinsamen Durchflussgehäuse angeordnet, so wird eine kompakte und in einem einzigen Gehäuse unterbringbare Vorrichtung geschaffen, die in integrierter Weise sowohl die hydraulischen Elemente für die Wärmemengenmessung als auch für die Regelung der vom Fluidstrom abgegebenen Wärmemenge enthält. Die beiden Regelglieder und das Auf-Zu-Ventil lassen sich auch konstruktiv besonders einfach ausbilden und übereinander im Gehäuse unterbringen und für die Verschiebung der leicht beweglichen grossflächigen Membranen sind nur geringe Verstellkräfte erforderlich.

Nach dem Merkmal des Anspruchs 3 ist die vom Volumenstromregler durchgelassene Durchflussmenge mittels einer veränderbaren oder auswechselbaren Drossel einstellbar, wobei die eingestellte Durchflussmenge des Fluids in der Elektronikeinheit zwangsweise oder durch Einstellung in kodierter Form bei der Durchführung der Wärmemengenmessung berücksichtigt wird. Hierdurch lässt sich der durch den Heizkörper strömende Fluidstrom entsprechend der verwendeten Drossel bzw. der Drosseleinstellung der jeweils geforderten Wärmemengenabgabe anpassen und gleichzeitig wird die eingestellte Durchflussmenge auf die Elektronikeinheit übertragen, so dass stets der richtige Durchflusswert für die Wärmemengenmessung zur Verfügung steht.

Zweckmässigerweise wird die Druckdifferenz an dem nachgeschalteten Regelglied des Volumenstromreglers gemäss Anspruch 4 durch das in Reihe vor diesem angeordnete Regelglied, welches als Drossel wirkt, gebildet, so dass sich ein variabler Referenzdruck als Steuerbasis für die Feinregulierung ergibt.

Durch die in Anspruch 5 gekennzeichnete Zusammenfassung aller Bauteile zu einer kompakten Baueinheit, die mit den normalen Heizkörperanschlüssen versehen ist und einen die Elektronikeinheit und die Anzeige- und Einstellelemente aufnehmenden Ventilgehäuseaufsatz trägt, kann dieses Kompaktgerät jederzeit leicht anstelle eines herkömmlichen Heizkörperventils in die Heizkörperleitung eigebaut werden.

Vorteilhafterweise erfolgt die Regelung des Fluidstromes und damit der Raumtemperatur gemäss Anspruch 6 über einen das Oeffnen und Schliessen des Auf-Zu-Ventils auslösenden einstellbaren Thermostaten, der mit einer Regeleinrichtung der Elektronikeinheit in Verbindung steht.

Ist die Führungsgrösse oder der Sollwert des Thermostaten gemäss Anspruch 7 über die Zeit hin gemäss vorgegebener Werte automatisch veränderbar, so kann der Sollwert des Thermostaten in Abhängigkeit von der Zeit von der Regeleinrichtung der Elektronikeinheit auf die vorgegebenen Werte selbsttätig umgesteuert werden. Hierzu lassen sich verschiedene Ablaufprogramme vorprogrammieren, die vom Benutzer angewählt werden, oder es kann vom Benutzer über einen in der Elektronikeinheit vorgesehenen Mikroprozessor ein eigenes Ablaufprogramm aus Teilprogrammen zusammengestellt werden.

Zur Energieversorgung des Gerätes lassen sich entsprechend Anspruch 8 auch Solarzellen oder Halbleiter-Thermoelemente zur Umwandlung der im Fluidstrom gespeicherten Energie in elektrische Energie vorsehen, wodurch auf den Einbau einer Hilfsbatterie verzichtet werden kann.

Gemäss einer weiteren Ausgestaltung nach Anspruch 9 ist ein Strömungsmelder im Gerät vorgesehen, der ein eine Strömung oder den Fluidstillstand anzeigendes Signal an die Elektronikeinheit abgibt. Durch diesen Strömungsmelder kann die Integration der Temperaturdifferenzwerte der Temperaturfühler beim Melden einer Strömung ausgelöst und beim Melden eines Fluidstillstandes, d. h. beim Schliessen des Auf-Zu-Ventils wieder gestoppt werden, wodurch die Wärmemenge in einfacher Weise sicher erfasst wird.

Weitere Vorteile der Erfindung ergeben sich aus den übrigen Ansprüchen und aus der nachfolgenden Beschreibung, in der Ausführungsbeispiele der erfindungsgemässen Vorrichtung unter Bezugnahme auf die Zeichnungen im einzelnen erläutert sind.

Dabei zeigt:

Figur 1 eine Aussenansicht einer konkreten Ausführungsform der erfindungsgemässen Vorrichtung;

Figur 2 die Installation bzw. Anordnung einer erfindungsgemässen Vorrichtung an einem Heizkörper;

Figur 3 ein Blockschaltbild der erfindungsgemässen Vorrichtung;

Figur 4 eine schematische Darstellung der erfindungsgemässen Vorrichtung;

Figur 5 einen Längsschnitt durch eine konkrete Ausführungsform des Durchflussgehäuses einer erfindungsgemassen Vorrichtung und

Figur 6 die Darstellung eines Magnetsystems.

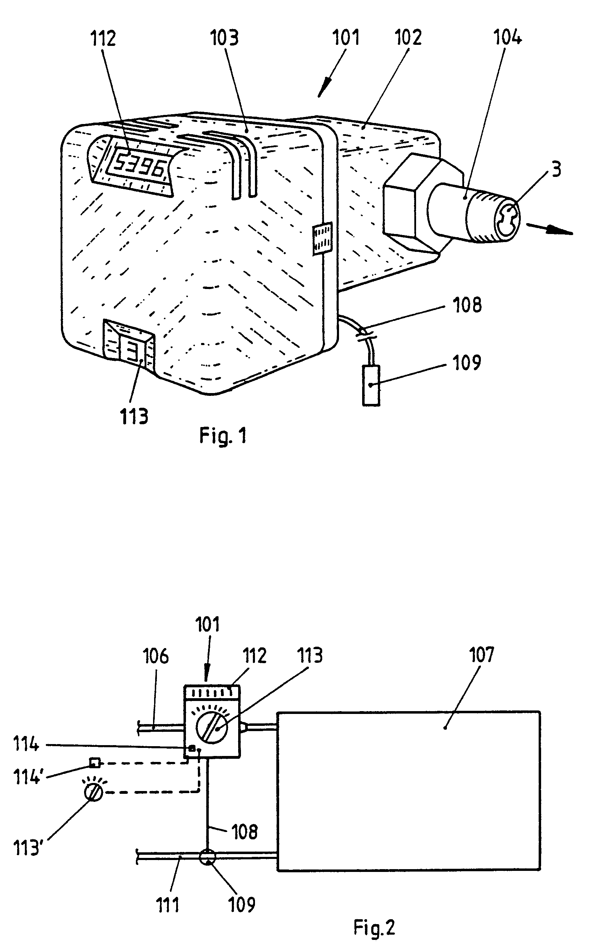

Die erfindungsgemässe Vorrichtung besteht aus einer kompakten Einheit 101 mit einem Durchflussgehäuse 102, durch das der Fluidstrom fliesst und in dem die mechanischen Teile, insbesondere Ventilelemente und elektromagnetischen Teile der erfindungsgemässen Vorrichtung untergebracht sind. Weiterhin weist die Einheit 101 einen Gehäuseteil 103 auf, in dem die Elektronik, die Anzeige sowie die Einstell- bzw. Vorgabeelemente untergebracht sind. Am Durchflussgehäuse 102 sind zwei Anschlüsse 104 für den Einlass und den Auslass (wobei nur der Auslass in der Fig. 1 ersichtlich ist) vorgesehen, mittels derer die erfindungsgemässe Vorrichtung in der dargestellten Ausführungsform in die Vorlaufleitung 106 zum Heizkörper 107 einer Heizungsanlage genauso wie ein herkömmliches Ventil eingesetzt werden kann (Fig. 2). An der Einheit 101 ist eine Leitung 108 vorgesehen, an deren Ende ein elektrischer Temperaturfühler 109 beispielsweise in einer Schelle od. dgl. untergebracht ist, die an der Rücklaufleitung 111 vom Heizkörper 107 befestigbar ist. Im Gehäuse 102 ist ein weiterer Temperaturfühler untergebracht (nicht im einzelnen dargestellt) mittels dem unmittelbar die Vorlauftemperatur in der Leitung 106 zum Heizkörper 107 gemessen werden kann. Es können verschiedenartige Temperaturfühler eingesetzt werden, wie Widerstandsthermometer, Thermoelemente oder vorzugsweise elektronische Stromsensoren, die ein der absoluten Temperatur proportionales Stromsignal abgeben und welche in Serie geschaltet werden können, so dass direkt ein der Temperaturdifferenz zwischen Vorlauf und Rücklauf (106, 111) proportionales Stromsignal entsteht. Gegebenenfalls kann mittels aktiver Thermoelemente (Peltier-Elemente), möglicherweise unter Einsatz eines Pufferakkumulators die Energie für die Elektronik der erfindungsgemässen Vorrichtung aus der (thermischen) Energie des zu messenden Fluidstromes in bekannter Weise gewonnen werden.

Das die Elektronik aufnehmende Gehäuseteil 103 weist eine Anzeige 112 auf, mittels der die im Heizkörper 107 verbrauchte bzw. von diesem abgegebene Energie, z. B. in Vergleichseinheiten, angezeigt und abgelesen werden kann. Weiterhin ist eine Einstelleinrichtung 113 eines Thermostates vorgesehen, mittels der die Raum-Solltemperatur oder der Ablauf der Solltemperatur über die Zeit hin eingestellt bzw. vorgewählt werden kann. In das Gehäuseteil 103 ist ein Raumtemperaturfühler 114 integriert, der die Ist-Temperatur des Raumes misst, die mit der momentanen Solltemperatur zur Regelung des Durchflusses durch das Durchflussgehäuse 102 zum Heizkörper 107 verglichen wird. Neben der in das Gehäuseteil integrierten Einstelleinrichtung 113 kann auch eine Fernsollwert-Einstellung 113' und/oder ein Fernfühler 114' vorgesehen sein, wie in der Figur 2 skizziert ist.

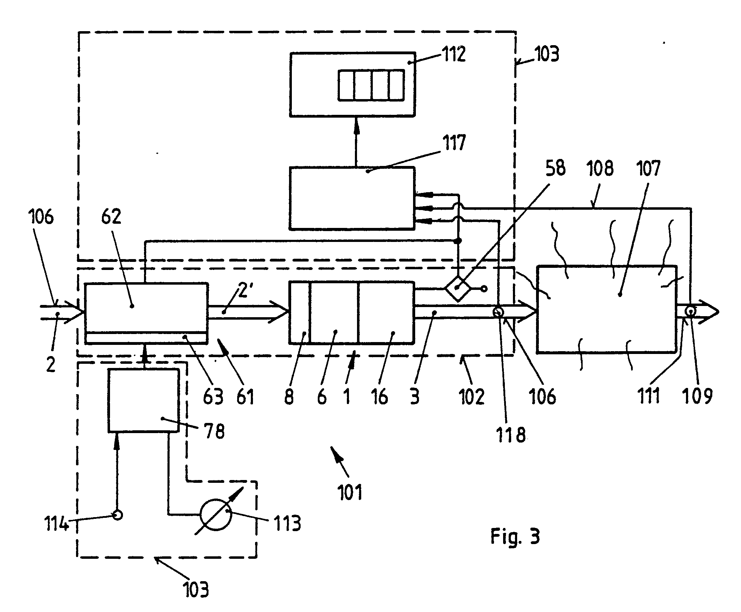

In der Figur 3 ist nun ein Blockschaltbild der erfindungsgemässen Vorrichtung 101 dargestellt. Im Vorlauf 106 zum Heizkörper 107 ist zunächst im gemeinsamen Durchflussgehäuse 102 für das Fluid im dargestellten Ausführungsbeispiel das Ventilsystem 61 zum Sperren und Durchlassen des Fluidstromes angeordnet, wobei das Ventilsystem 61 ein als Auf-Zu-Ventil ausgebildetes Hauptventil 62 und ein Steuerteil 63 aufweist. Das Steuerteil 63 wird durch eine Regeleinrichtung 78 in Abhängigkeit von einem in diesem vorgenommenen Vergleich zwischen der aktuellen Führungsgrösse oder dem aktuellen Sollwert, der über die Einstelleinrichtung 113 eingestellt ist, und dem Ist-Wert vom Raumtemperaturfühler 114 geregelt. Anstelle von Einstelleinrichtung 113 und Raumtemperaturfühler 114 kann auch ein anderer Steuerimpuls, z. B. von einem Zeitprogramm eingegeben werden. Die Schaltung des Fluidstromes im einzelnen geschieht in der weiter unten erläuterten Weise. Im Ventilsystem 61 ist der Volumenstromregler 1 nachgeordnet, der nach Einstellung über eine einstellbare Drossel 8 mittels eines 1. Regelgliedes 6 und einem nachgeschalteten als Kompensationsstufe wirkenden Regelgliedes 16 einen immer konstanten Mengen- oder Volumenstrom zum Auslass 3 und damit zum Heizkörper 107 durchlässt.

Im Durchflussgehäuse 102 ist weiterhin ein Strömungsmelder 58 vorgesehen, der feststellt, ob durch die Vorlaufleitung 106 ein durch den Volumenstromregler geregelter Fluidstrom stattfindet, oder aber der Fluidstrom durch das Ventilsystem 61 unterbrochen ist. Die vom Strömungsmelder 58 gemessene Information wird an die Elektronikeinheit 117 im Gehäuseteil 103 weitergegeben. Das gleiche gilt für die mit den Temperaturfühlern 109 und 118 gemessene Temperatur in der Rücklauf (111)- bzw. Vorlaufleitung (106) zum Heizkörper 107. Die derart gewonnenen Informationen werden dann unter Berücksichtigung der Drosseleinstellung, d. h. der gegebenen Durchflussmenge, beispielsweise in codierter Form in der Elektronikeinheit 117 verarbeitet. Das Ergebnis bzw. die Summierung der Messungen wird dann über die Anzeige 112 angezeigt. Insgesamt werden durch die erfindungsgemässe Vorrichtung 101 also die Energiemengen erfasst, die durch einen individuellen Verbraucher, hier den Heizkörper 107 abgegeben werden, wobei die abzugebende Energiemenge über den Regler 78 geregelt bzw. in vorgegebener Weise gesteuert wird.

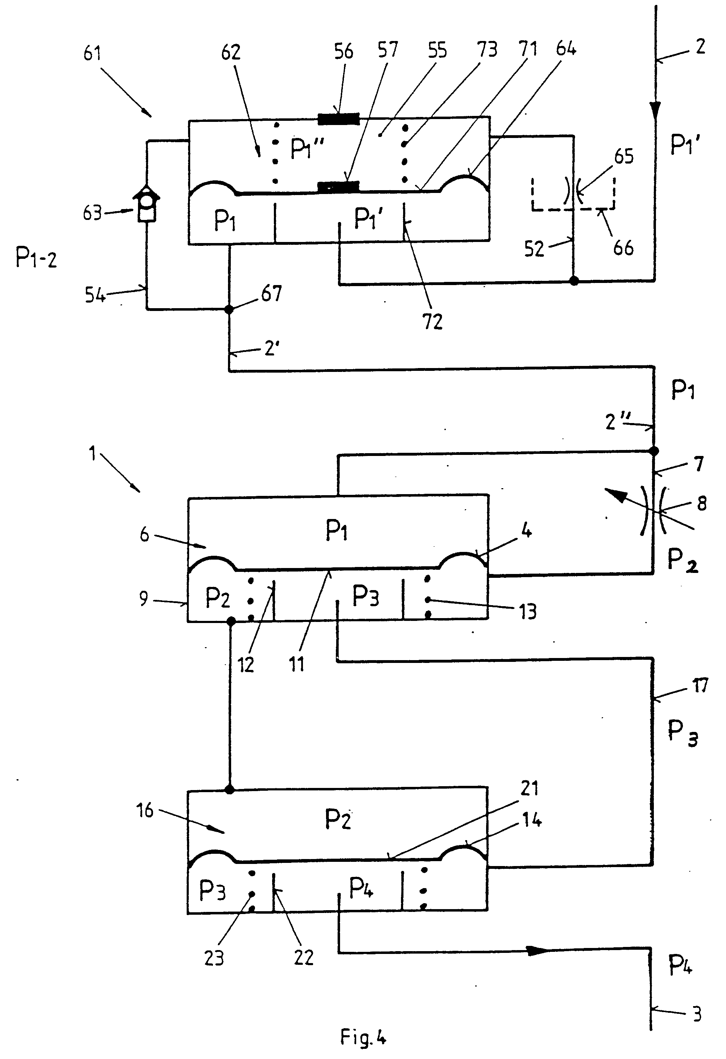

Die im Durchflussgehäuse 102 gemeinsam untergebrachten mechanischen und elektromagnetischen Regeleinheiten sind in der Figur 4 zunächst schematisch dargestellt.

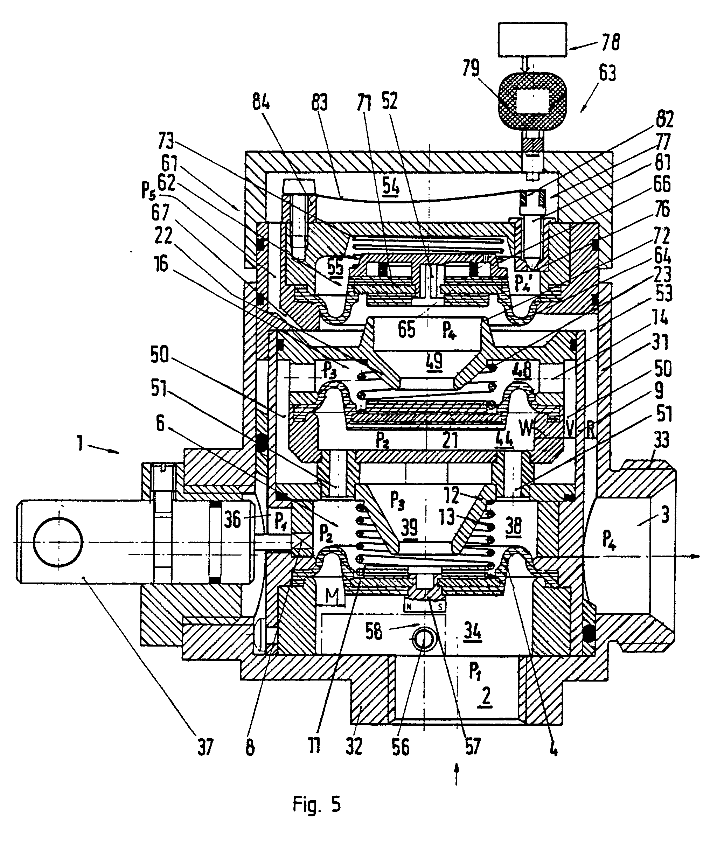

Die Ventileinheit 61 zum Sperren und Durchlassen je eines Flüssigkeitsstromes in einer Heizungsanlage weist das als Auf-Zu-Ventil ausgebildete Hauptventil 62 und ein Steuerteil 63 mit einem Steuerventil auf, welches in der Figur 4 nur im Prinzip dargestellt ist. Das Hauptventil 62 weist eine Membran 64 auf, die mit ihrem Umfangsrand in der Wand eines äusseren Gehäuses oder einem Einsatzteil (beides in Fig. 4 nicht dargestellt) festgelegt ist. Die Membran 64 ist lediglich in einem Ringbereich der Walkzone M (Fig. 5) elastisch und damit eigentlich als Membran ausgebildet und weist in ihrem Zentralbereich der Stützzone, einen starren, plattenförmigen Ventildeckel 71 auf. Dem Ventildeckel 71 ist auf der einem Einlass 49 zugewandten Seite der Membran 64 ein ringförmiger Ventilsitz 72 zugeordnet bzw. liegt dieser Ventilsitz 72 dem Ventildeckel 71 gegenüber. Der Ventildeckel 71 wird durch eine Ring- oder Spiralfeder 73 gegen den Ventilsitz 72 gedrückt. Wenn der Ventildeckel 71 auf dem Ventilsitz 72 aufliegt, ist das Hauptventil 62 geschlossen und es findet keine Fluidströmung von dem Einlass 2 zu einem Auslass 2' zum Volumenstromregler 1 hin statt. Vom Einlass 2 zu einem Raum 55 auf der dem Ventilsitz 72 abgewandten Seite der Membran 64 ist ein Bypass oder eine Nebenleitung oder -verbindung 52 geführt. In gleicher Weise führt von dem Raum 55 zum Auslass 2' eine Nebenleitung 54. In der Nebenleitung 52, die konstruktiv als Durchlass durch den Ventildeckel 71 ausgebildet sein kann (hierzu weiter unten), ist eine Blendenöffnung 65 angeordnet, der ein Filter 66 vorgeschaltet ist. Das in der Nebenleitung 54 befindliche Steuerteil 63 weist ein Ventil auf, mittels dessen die Nebenleitung 54 vom Raum 55 zum Auslass 2' geöffnet oder gesperrt werden kann. Der Injektorartige Anschluss 67 der Verbindungs- oder Nebenleitung 54 zum Auslass 2' ist derart, dass bei einem Flüssigkeitsfluss vom Einlass 2 durch das Hauptventil 62 zum Auslass 2' in der Nebenleitung 54 befindliche Flüssigkeit nach dem Injektorprinzip mitgerissen wird und damit in der Leitung 54 und bei geöffnetem Steuerteil 63 im Raum 55 ein Unterdruck erzeugt wird.

Es wird angenommen, die Ventileinheit 61 und damit insbesondere das Hauptventil 62 sei geschlossen. Dann befindet sich vor dem Hauptventil 62 ein Druck P1' und am Auslass 2' ein Druck P1, der geringer ist als der Druck P1'. Bei diesem Schliesszustand ist auch das Steuerteil 63 geschlossen. Der Druck P1″ im Raum 55 hat sich daher über die Blendenöffnung 65 dem Druck P1′ im Einlass 2 angeglichen. Auf der dem Ventilsitz 72 abgewandten Seite der Membran 64 wirkt daher auf diese neben der Federkraft 73 der Druck P1″.

Auf der dem Ventilsitz 72 zugewandten Seite der Membran 64 wirken auf entsprechende Teilflächen der Membran die Drücke P1′ und P1. Da P1 der niedrigste Druck der Ventileinheit 61 ist, sind die vom Raum 55 her wirkenden Kräfte auf die Membran 64 immer höher als die von der Seite des Ventilsitzes 72 her wirkenden, so dass das Ventil in diesem Fall geschlossen bleibt.

Wird nun durch einen Stellimpuls das Steuerteil 63 mit dem Steuerventil geöffnet, wobei das Steuerventil selbst und der Oeffnungsvorgang weiter unten im einzelnen erläutert wird, so fällt der Druck P1″ in der Kammer 55 ab und schliesst mit möglichst geringem Druckgefälle an den Druck P1 am Auslass 2′ an. Aufgrund der Oeffnung 65 mit geringerem Querschnitt als am Durchlass 76 (Fig. 5), kann die Kammer 55 nicht ausreichend schnell über die Nebenleitung 52 her aufgefüllt werden, so dass sich eine Druckdifferenz zwischen dem Einlass 2 mit dem Druck P1′ und der Kammer 55 mit dem Druck P1″ ergibt. Damit kann der Druck P1′ auch schon bei einer kleinen Druckdifferenz P1′ - P1″ den Ventildeckel 71 vom Ventilsitz 72 abstossen und damit das Hauptventil 62 öffnen. Durch den injektorartigen Anschluss 67 der Nebenleitung 54 an den Auslass 2′ kann im übrigen erreicht werden, dass der Druck P1″ im Raum 55 kleiner als der Druck P1 am Auslass 2′ ist, so dass auch nach Oeffnen des Auf-Zu-Ventils 62 dieses zuverlässig offen bleibt bzw. offen gehalten wird. Zum Schliessen des Ventilsystems 61 und damit des Unterbrechens eines Flüssigkeitsstromes vom Einlass 2 zum Auslass 2′ wird durch einen Impuls das Steuerventil des Steuerteils 63 geschlossen. Es tritt in der Kammer 55 damit ein Staudruck durch die zunächst vorhandene Druckdifferenz zwischen dem Einlass 2 mit dem Druck P1′ und dem geringeren Druck P1″ in der Kammer 55 auf, so dass sich über die Oeffnung 65 mit der Zeit der Druck P1″ in der Kammer 55 dem Druck P1′ annähert, bis die Kräfte des Drucks P1″ in der Kammer 55 und der Feder 73 die entgegengesetzt wirkenden Kräfte der Drücke P1′ am Einlass 2 und PI am Auslass 2′ auf die Membran 64 überwiegen und damit das Hauptventil 62 geschlossen wird, wie schon oben erwähnt. Die Feder 73 bedingt schon eine Differenzkraft, auch dann, wenn keine Strömung vorhanden ist. Darüberhinaus wird durch die Feder 73 ein Schwingen der Membran 64 unterbunden.

Bei der dargestellten Ausführungsform ist im Ventilsystem 61 zum Sperren bzw. Durchlassen des Fluidstromes der Strömungsmelder als berührungsloser oder Näherungsschalter untergebracht, mit dem festgestellt wird, ob überhaupt ein Fluidfluss stattfindet oder nicht. Hierzu ist bei der dargestellten Ausführungsform oberhalb der Ventilmembran 4 ein sogenannter Reed-Schalter 56 angeordnet. Im Zentrum der Membran 4 bzw. dieses Membrandeckels ist ein Dauermagnet 57 eingesetzt, der aufgrund der Veränderung seines Abstandes zum Reed-Schalter 56 mit der Bewegung der Membran 4 den Reed-Schalter 56 schaltet. Der Auslass 2′ des Ventilsystems 61 führt als Einlass 2″ zum Volumenstromregler 1 mit einem ersten Regelglied 6 und einem als Kompensationsstufe wirkenden Regelglied 16. Bei geöffnetem Ventilsystem 61 soll dabei vom Einlass 2 bzw. Einlass 2″ des Volumenstromreglers 1 zum Auslass 3 unabhängig von der Druckdifferenz zwischen Einlass und Auslass ein konstanter Durchfluss stattfinden. Der Einlass 2″ führt zur Steuerkammer des Regelgliedes 6. Die Membran 4 wird damit auf der dem Einlass zugewandten Seite mit dem dort herrschenden Druck P1 beaufschlagt.

Eine Bypassleitung 7 führt über eine einstellbare Drossel 8, die den Druck P1 auf einen Druck P2 reduziert, zu der auf der anderen Seite der Membran 4 liegenden Durchflussregelkammer des Regelgliedes 6.

Das Regelglied 6 weist zunächst eine im wesentlichen flache Membran 4 auf, die mit ihrem Umfangsrand in der Wand einer in ein äusseres Gehäuse (hier nicht dargestellt) einsetzbaren Patrone 9 festgelegt ist. Die Membran 4 ist lediglich in einem Ringbereich elastisch und damit eigentlich als Membran ausgebildet, weist in einem Zentralbereich einen starren, plattenförmigen Deckel 11 auf. Dem Deckel 11 ist auf der dem Einlass 2″ abgewandten Seite der Membran 4 ein ringförmiger Sitz 12 zugeordnet bzw. liegt dem Deckel 11 gegenüber. Der Sitz 12 ist fest mit der Patrone 9 verbunden. Der Sitz 12 umschliesst nur eine geringe Fläche der gesamten von der Patrone umgebenden Fläche. Der Deckel 11 wird durch eine am Sitz 12 gegengelagerte Feder 13 vom Sitz 12 fortgedrückt. Der variable Durchlass zwischen Deckel 11 und Sitz 12 wirkt als veränderliche Drossel, so dass innerhalb des vom Sitz 12 umschlossenen Raumes ein im allgemeinen gegenüber dem Druck P2 geringerer Druck P3 herrscht. In der dem Zufluss abgewandten Seite der Membran liegenden Durchflussregelkammer herrschen also durch die Drücke P2 und P3 sowie die ihnen zugeordneten Flächen bestimmte Kräfte. Dem Regelglied 6 ist ein weiteres Regelglied 16 in Reihe nachgeordnet. Es sei hier darauf hingewiesen, dass, wenn auch in der skizzenhaften Darstellung der Figur 4 das Regelglied 16 ebenso wie das Regelglied 6 dargestellt sind, ihre Abmessungen im Regelfall durchaus von denen des Regelgliedes 6 abweichen können. Das Regelglied 16 weist ebenso wie das Regelglied 6 eine Membran 14 mit einem Membrandeckel 21 auf, dem ein Sitz 22 zugeordnet wird, von dem der Membrandeckel 21 durch eine Feder 23 bei entsprechenden Druckverhältnissen fortgedrückt wird. Der der Feder 23 und dem Sitz 22 abgewandte Raum der Durchflussregelkammer des Regelgliedes 16 ist direkt mit dem Raum auf der ihrer Feder 13 und ihrem Sitz zugewandten Seite der Membran 4 verbunden, in dem der Druck P2 herrscht, so dass in dem erwähnten Raum des Regelgliedes 16 ebenfalls der Druck P2 herrscht. Von der Innenseite des im Querschnitt ringförmigen Sitzes 12 führt eine Verbindung 17 zu dem den Sitz 22 des Regelgliedes 16 umgebenden Raum auf der dem Sitz 22 zugewandten Seite der Membran 14, so dass in diesem Aussenraum der gleiche Druck wie innerhalb des Sitzes 12, also P3, herrscht. Das Regelglied 6 wirkt damit als variable Drossel für das Regelglied 16 entsprechend der einstellbaren Drossel 8 für das Regelglied 6. Am Auslass 3 des Volumenstromreglers 1 herrscht dann im dargestellten Ausführungsbeispiel der gleiche Druck P4 wie innerhalb des Sitzes 22, soweit nicht zwischen Auslass 3 und Sitz 22 weitere einstellbare Drosseln oder weitere dem Regelglied 16 entsprechende Regelglieder angeordnet sind. Die einstellbare Drossel 8 kann bestehen aus einem festen Blendenteil, welches gegen einen verschiebbaren Blendenteil so verschoben werden kann, dass sie zusammen eine variable Blendenöffnung bilden, welche vorzugsweise scharfkantig ausgebildet ist. Besonders vorteilhaft sind im wesentlichen runde Begrenzungen der Blendenöffnung, welche vor allem bei kleinen Blendenöffnungen eine möglichst kreisförmige Oeffnung bilden, d. h. eine grosse Fläche mit kleinem und rundem Begrenzungsumfang. Die resultierende kleinste Blendenöffnung kann z. B. halb kreisförmig und halb quadratisch werden. Durch die scharfkantige und möglichst kreisförmige Ausführung der Blendenöffnung wird eine Veränderung der Blendenöffnungsfläche infolge Verschmutzungsauftrag verhindert. Anstelle der verschiebbaren Blenden können aber auch auswechselbare kreisförmige Einsatzblenden vorgesehen werden. Dies ermöglicht es, mit nur einer Sorte Regelglieder und verschiedenen Einsatzblenden ein grosses Sortiment von Volumenstromreglern mit verschiedenen Durchflusswerten am Lager zu halten.

Im folgenden wird auf die Figur 5 Bezug genommen. In der Figur 5 ist eine kompakte Ausführungsform der erfindungsgemässen Vorrichtung mit Volumenstromregler 1 und integriertem bistabilem Auf-Zu-Ventilsystem 61 im Längsschnitt dargestellt. Die gesamte Einheit ist in einem äusseren Gehäuse 31 untergebracht, das einen Anschlussstutzen 32 für den Einlass 2 und einen Anschlussstutzen 33 für den Auslass 3 aufweist. Die Regelglieder 6, 16 des Volumenstromreglers 1 wie auch das Ventilsystem 61 sind in der in das Gehäuse 31 eingesetzten Patrone 9 angeordnet.

Der Einlass 2 führt hier zu einer Kammer 34. Dem Einlass 2 gegenüberliegend ist die Membran 4 des Regelgliedes 6 angeordnet. Die Membran 4 ist mit ihrem Umfang in der Patrone 9 fest eingeklemmt, während ihr zentraler Teil als starrer Deckel 11 ausgebildet ist. Auf der der Kammer 34 abgewandten Seite des Deckels 11 ist der Sitz 12 vorgesehen, der ebenfalls fest in der Patrone 9 angeordnet ist. Der Sitz 12 ist kegelstumpfmantelförmig ausgebildet, wobei er sich zum Deckel 11 hin verjüngt. Hierdurch kann an dem weitesten Teil des Sitzes 12 die Feder 13 anliegen, ohne dass ihre Bewegung durch die Gefahr eines Berührens im Zwischenbereich am Sitz gehindert werden könnte. Die Feder 13 drückt mit ihrer dem Sitz 12 abgelegenen Seite gegen den Deckel 11 und hält daher das Regelglied im drucklosen Zustand ganz offen. Die Kammer 34 ist über im einzelnen nicht dargestellte Durchbrüche mit einer seitlichen Kammer 36 derart verbunden, dass in der Kammer 36 der gleiche Druck P1 wie in der Kammer 34 herrscht. Die Kammer 36 ist über die mittels eines Handgriffs 37 von aussen einstellbare Drossel 8 fluidisch mit einer den Sitz 12 umgebenden Ringkammer 38 verbunden, in der ein gegenüber dem Druck P1 geringerer Druck P2 herrscht. Je nach Oeffnungsgrad des Regelgliedes 6 aufgrund der vorherrschenden Druckverhältnisse herrscht in dem durch den Sitz 12 gegenüber der Ringkammer 38 abgegrenzten Innenraum 39 des Sitzes 12 ein im allgemeinen gegenüber dem Druck P2 geringerer Druck P3. Direkt oberhalb des Regelgliedes 6 ist das weitere Regelglied 16 angeordnet, wobei aufgrund der Ausgestaltung der Regelglieder mit Membranelementen eine kompakte Anordnung mit geringer Bauhöhe erreicht wird. Das Regelglied 16 weist die Membran 14 auf, die ebenfalls an ihrem Aussenrand über mit der Patrone 9 fest verbundenen Teilen eingespannt ist und in ihrem Zentralbereich den Deckel 21 aufweist. Die Membran 14 trennt eine Kammer 44 von einer Ringkammer 48, die einen ebenfalls zumindest über einen Teilbereich kegelstumpfförmig ausgebildeten Sitz 22 umgibt, der einen Innenraum 49 umschliesst. Der Aussenbereich des Sitzes 22 dient in entsprechender Weise als Widerlager für die Feder 23, die mit ihrem anderen Ende an dem Deckel 21 anliegt und diesen bei drucklosen Verhältnissen vom Sitz 22 fortdrückt.

Die Kammer 44 ist über Durchlässe 51 mit der Ringkammer 38 verbunden, während der Innenraum 39 des Sitzes 12 mit der Ringkammer 48 oberhalb der Membran 14 über Verbindungsbereiche 50 verbunden ist. Der durch den Sitz 22 gegenüber der Ringkammer 48 abgegrenzte Innenraum 49, der einen gegenüber dem Druck P3 in der Ringkammer 48 geringeren Druck P4 aufweist, ist über das Auf-Zu-Ventilsystem 61 und über ausserhalb der Patrone, insbesondere zwischen der Aussenwand der Patrone 9 und der Innenseite der Wand des Gehäuses 31 befindliche Zwischenräume 53 mit dem Auslass 3 des Gehäuses 31 verbunden. In dem erfindungsgemässen Volumenstromregler ist hier noch der berührungslose oder Näherungsschalter 58 als Strömungsmelder integriert. Hierzu ist unterhalb des Ventildeckels 11 der Reed-Schalter 56 angeordnet. Im Zentrum des Ventildeckels 11 ist der Dauermagnet 57 eingesetzt, der aufgrund der Veränderung seiner Nähe zum Reed-Schalter 56 mit der Bewegung des Ventildeckels 11 den Reed-Schalter 56 schaltet.

Die gesamte Ventileinheit 61 ist ebenfalls in dem gemeinsamen Gehäuse 31 untergebracht. Der Einlassraum 49 ist vom Ventilsitz 72 umgeben, der wiederum von einem Teil des Auslasses 53 in Form eines Ringkanals umgeben ist. Ueber dem Ventilsitz 72 ist die Membran 64 mit dem Ventildeckel 71 angeordnet. Sie wird von der Feder 73 gegen den Ventilsitz 72 gedrückt. Der Figur 5 ist insbesondere zu entnehmen, dass die Nebenleitung 52 vom Einlass 49 zur Kammer 55 eine im Ventildeckel 71 angeordnete Oeffnung 65 aufweist, wobei der Oeffnung 65 das Filter 66 vorgeschaltet ist. Von der Kammer 55 führt ein schmaler Durchlass 76 zur Nebenleitung 54 der Figur 4, die bei der konkreten Ausführungsform der Figur 5 zunächst als weitere Kammer 54 und sodann vor dem Injektoranschluss 67 als Ringkammer ausgebildet ist.

Das Steuerteil 63 mit einem Steuerventil 77, zu dem der Durchlass 76 gehört ist nun erfindungsgemäss folgendermassen ausgestaltet : Das Steuerteil 63 weist zunächst eine Regeleinrichtung 78 auf, von der Steuerimpulse, die beispielsweise durch Temperaturänderung bzw. Ueberschreiten oder Unterschreiten gewisser Temperaturgrenzen oder andere Signale bedingt sind, ein vorzugsweise bistabiles Magnetsystem 79 beaufschlagen. Von dem bistabilen Magnetsystem 79 wird ein Ventilkolben 81 über einen an ihm befestigten Anker 62 derart bewegt, dass der Durchlass 76 entweder geschlossen oder geöffnet wird. Befindet sich der Stössel 81 in seiner unteren Stellung, so wird der Durchlass 76 und damit das Steuerventil 77 geschlossen, befindet sich der Stössel 81 mit dem Anker 82 in seiner oberen Stellung, so ist der Durchlass 76 und damit das Steuerventil 77 geöffnet. Damit das Magnetsystem möglichst wenig Energie und dies lediglich zum Schalten aufnehmen muss, nicht aber zum Halten des Stössels 81 in den beiden Stellungen, ist der Kolben oder Stössel 81 hier mit einer Hilfsfeder 83 verbunden, die an ihrem dem Kolben 81 entgegengesetzten Ende auf einer Halterung 84 festgelegt ist. Die Hilfsfeder 83 hat die Aufgabe, das Steuerventil 77 im geschlossenen Zustand mit einer genügenden Kraft (von wenigen Gramm) auf den Ventilsitz zu drücken und damit dicht zu halten. Prinzipiell könnte diese Funktion aber auch ohne Hilfsfeder erfüllt werden, beispielsweise durch einen kleinen Permanentmagneten am Durchlass 76, der einen ferromagnetisch ausgebildeten Stössel 81 auf den Ventilsitz zieht. Im Prinzip wird dann das Steuerventil 77 bzw. der Stössel 81 in seine beiden Endlagen (offen und geschlossen) je durch einen kleinen Permanentmagneten gehalten und durch die Magnetspule beider Richtungen des elektromagnetischen Systems nach oben bzw. nach unten umgeschaltet. Die Hilfsfeder 83 könnte auch als Schnappfeder ausgebildet sein mit zwei bistabilen Stellungen, die der Oeffnungs- bzw. der Schliessstellung des Steuerventils 77 entsprechen. Wenn das Steuerventil 77 in einer seiner beiden Stellungen, entweder also der Schliess- oder der Oeffnungsstellung ist und in dieser Stellung durch die Schnappfeder 83 gehalten wird, muss das Magnetsystem 79 jeweils lediglich zum Umschalten die Haltekraft der Feder 83 überwinden. Tut das Magnetsystem das, so schnappt die Feder 83 in ihre andere bistabile Stellung um und bringt das Steuerventil 77 in seine andere Stellung, also von der Oeffnungs- in die Schliessstellung oder aber von der Schliessin die Oeffnungsstellung.

Dadurch, dass die Haltefunktion des Ventils 77 in beiden Stellungen entweder durch Hilfsfedern, Schnappfedern oder Permanentmagnete gewährleistet ist, benötigt das Magnetschaltglied 79 lediglich Energie zum Umschalten, nicht aber zum Halten des Steuerventils 77 in einer oder beiden Stellungen. Der gesamte Energieverbrauch ist dabei so gering, dass ein derartiges bistabiles Heizungsventil mit zwei billigen kleinen Hilfsbatterien der Grösse LR6 über ein Jahr betrieben werden kann.

Das Schalten des gesamten Ventilsystems 61 erfolgt in der unter Bezugnahme auf die Figur 4 beschriebenen Weise, so dass hierauf nicht weiter eingegangen werden muss.

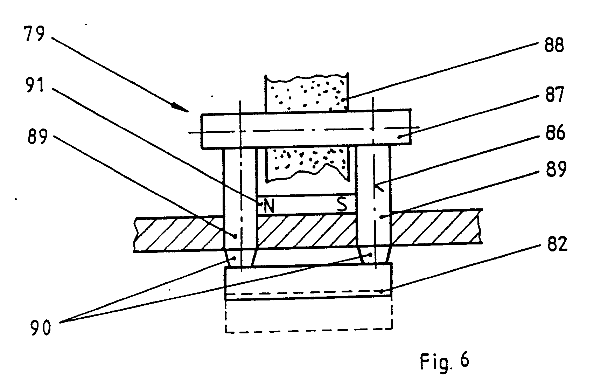

Eine Ausführungsform eines bistabilen Magnetsystems 79 ist in der Figur 6 dargestellt. Das Magnetschaltglied 79 ist in der Figur 6 dargestellt. Das Magnetschaltglied 79 weist einen magnetischen Kreis mit einem U-förmigen Joch 86 und den beweglichen Anker 82 auf, der mit dem Stössel 81 (Fig. 5) verbunden ist. Der Steg 87 des Joch 86 ist in üblicher Weise von der Erregerspule 88 umgeben. Während insbesondere das Joch 86 aus weichmagnetischem Werkstoff besteht, ist zwischen den Schenkeln 89 des weichmagnetischen Jochs 86 ein Permanentmagnet 91 eingesetzt. Die magnetischen Feld- und Kraftverhältnisse sind dabei derart getroffen, dass der Permanentmagnet 91 über die beiden Schenkel 89 des Jochs 86 und nicht eingeschalteter Erregerspule 88 den Anker 82 mit dem Ventilkolben 81 in der in Fig. 6 durchgehend gezeichneten angezogenen Stellung sicher hält, jedoch nicht mehr aus der dort gestrichelt gezeichneten Stellung anzieht.

Wird nun ein dem durch den Permanentmagneten über den Anker gebildeten magnetischen Kreis entgegenwirkendes Magnetfeld durch Einschalten der Erregerspule 88 eingeschaltet, das als Verdrängerfeld gegenüber dem Feld des Permanentmagneten wirkt, so fällt der Anker zumindest vom Joch 89 ab, wobei bei einer Ausgestaltung mit Hilfsfeder das Verdrängerfeld das Permanentmagnet-Feld soweit überwinden kann, dass die Hilfsfeder 83 in ihre der Schliessstellung des Ventils 77 entsprechende Stellung gedrückt wird. Prinzipiell reicht es aber aus, dass auf den Anker 82 beispielsweise neben den verschiedenen erwähnten Magnetfeldern lediglich noch die Gewichtskraft wirkt.

Wird ein das Permanentmagnet-Feld verstärkendes Feld durch Einschalten der Erregerspule 98 eingeschaltet, so wird der Anker aus der strichpunktiert dargestellten Schliessstellung in die durchgezeichnet dargestellte Oeffnungsstellung (Fig. 6) gezogen und dabei ggf. die Kraft einer Schnapp- oder herkömmlichen Feder und-/oder die Gewichtskraft überwunden und der Anker auf jeden Fall bei ausgeschalteter Erregerspule 88 in seiner oberen, in Fig. 6 durchgezeichnet dargestellten Stellung gehalten. Zur magnetischen Feldverstärkung weisen die Schenkel 89 eine Querschnittsverengung 90 auf.

Es sei hier festgehalten, dass das bistabile Steuerteil beispielsweise auch magnetische und mechanische bistabile Teile oder aber ein mechanisches bistabiles Element (Schnappfeder) mit einem herkömmlichen Magnetsystem oder ein bistabiles Magnetsystem mit einsinnig wirkenden mechanischen Kräften (übliche Feder, Gewichtskraft) aufweisen kann, wobei allerdings die erwähnten Ausgestaltungen bevorzugt sind.

Durch das dargestellte bistabile Steuerteil 63 kann die erläuterte Funktionsweise des Ventilsystems 61 durchgeführt werden, indem lediglich zum Schalten geringe Schaltenergien erforderlich sind, die bei den Schaltzuständen aber ohne Energieverbrauch aufrecht erhalten werden.

Im folgenden werden ergänzende Richtlinien zur vorzugsweisen Ausgestaltung des Auf-Zu-Ventilsystems 61 gegeben.

Die Blendenöffnung 65, auch Bohrung genannt, soll möglichst klein gewählt werden, z. B. mit einem Durchmesser von 0,5 mm, vorzugsweise zwischen 0,3 und 0,6 mm, so dass nur sehr geringe Flüssigkeitsmengen durchströmen können. Die Oeffnung 65 darf aber keinesfalls infolge von Schmutzablagerungen vollständig verstopft werden. Dazu wird sie einmal kreisförmig und mit scharfen messerartigen Blendenkanten ausgebildet, wo sich keine Ablagerungen bilden können. Zudem wird der Oeffnung 65 noch ein feines Filter 66 vorgeschaltet. Dieses Filter 66 weist im Verhältnis zur geringen durchfliessenden Flüssigkeitsmenge eine grosse Oberfläche auf, so dass es auch nach sehr langer Zeit nicht infolge Verschmutzung vollständig verstopft werden kann. Vorteilhafterweise kann das Filter in zwei Zonen aufgeteilt werden, wobei eine Zone beströmt, die andere nicht beströmt ist. In der beströmten Zone kann eine gewisse Selbstreinigung durch die Strömung erzielt werden, während in der nicht beströmten Zone infolge fast verschwindender Strömungsgeschwindigkeit entsprechend wenig Verschmutzung an das Filter getragen wird. Die nicht beströmte Zone des Filters ist vorzugsweise oben angeordnet, so dass schwere Schmutzteilchen gar nicht mehr mitgezogen werden können. Je nach Art der Verschmutzung kann sich dann die eine oder die andere der beiden Zonen als weniger verschmutzungsanfällig herausstellen. Beide Zonen sind jedoch je so gross, dass sie alleine einen langjährigen genügenden Durchfluss für die kleine Düse 65 sicherstellen. Für das Filter 66 kann auch eine Filteranordnung mit vielen Falten zur Erhöhung der Filteroberfläche auf kleinem Volumen gewählt werden. Das Filter besteht aus nicht-ferromagnetischem Material, z. B. aus Kunststoffgewebe oder Bronze. Es kann dabei ein sehr dünnes Sinterfilter sein oder ein Filtergewebe. Die Porengrösse des Filters wird vorzugsweise 5-10 mal kleiner gewählt als die Filteröffnung.

Die Dimension des Durchlasses 76 am Steuerventil 77 muss deutlich grösser gewählt werden als die Oeffnung 65, der Durchmesser des Durchlasses 76 liegt vorzugsweise zwischen 1 und 2 mm, so dass z. B. ein Flächenverhältnis von Durchlass 76 zu Blendenöffnung 65 von 5 bis 10 entsteht.

Aus dem Vorstehenden ergibt sich, dass bei Beibehaltung einer kompakten Ausgestaltung die Hintereinanderanordnung von Auf-Zu-Ventilsystem 61 und Volumenstromregler 1 beliebig vertauscht werden kann. Ebenfalls kann der Strömungssensor 54 in weitgehend beliebiger Weise angeordnet werden.

Die Regelung des Durchflusses des Fluids zum und durch den Heizkörper 107 und die Konstanthaltung der Durchflussmenge bei offenem Auf-Zu-Ventilsystem 61 geschieht nun folgendermassen :

Ueber die Einstelleinrichtung 113 wird ein Soll-Temperaturwert für den Raum, in dem sich der Heizkörper 107 befindet, eingestellt bzw. ein Programm für die Soll-Temperatur vorgewählt. Im Elektronikteil 78 wird dann der Ist-Wert der Raumtemperatur über den Raumtemperaturfühler 114 gemessen und mit dem Sollwert verglichen. Verändert sich der Ist-Wert über den momentanen Soll-Wert hin, so gibt der Regler an das Ventilsystem 61 einen Schaltimpuls, und zwar einen Oeffnungsimpuls, wenn der Ist-Wert unter den Soll-Wert absinkt und einen Schliessimpuls, wenn der Ist-Wert über den Soll-Wert ansteigt.

Ist nun das Hauptventil 62 des Ventilsystems 61 durch einen Stellimpuls vom Regler 78 in einer vorstehend unter Bezugnahme auf die Figur 4 beschriebenen Weise geöffnet und damit der Weg vom Raum 49 zum Ringkanal 53 (Fig. 5) freigegeben, so funktioniert der Volumenstromregler 1 in der folgenden Weise :

Wenn die Kammer 34 drucklos ist, weil keine Flüssigkeit über den Einlass 2 zugeführt wird, befindet sich die Membran des Regelgliedes 6 in ihrer vollen Oeffnungsstellung, da die Membran 4 unter ausschliesslicher Einwirkung der Feder 13 vom Ventilsitz 12 fortgedrückt wird. Im Betriebszustand baut sich vor dem Volumenstromregler ein Systemdruck P1 auf. Nach dem Volumenstromgegler liegt ein Druck P4 vor, der durch den Arbeitswiderstand am Verbraucher bestimmt ist. Durch wechselnden Arbeitswiderstand und wechselnden Systemdruck kann sich das Druckgefälle zwischen P1 und P4 ändern. Voraussetzung für den konstanten Durchfluss ist dabei ein konstantes Druckgefälle an der einstellbaren Referenzdrossel 8, wobei zur Erreichung des angestrebten Nenndurchflusses ein Mindestwirkdruck oder Druckschwellwert erforderlich ist. Ist der Wirkdruck aber grösser, so muss der überschüssige Druck durch Drosselung in den Regelstufen 6 und 16 abgebaut werden, damit der Durchfluss innerhalb eines geringen Toleranz- oder Fehlerbereiches konstant bleibt.

Ist keine Strömung im Volumenstromregler 1 vorhanden, wirkt also auf die Membran 4 kein Druck, so sind die Auslassöffnungen der Regelglieder 6, 16 offen. Die Membranen 4, 14 werden durch die Federn 13, 23 vom entsprechenden Sitz 12, 22 fortgedrückt. Bei Einsetzen einer Strömung und erhöhtem Systemdruck P1 am Einlass 2 wird zunächst die Membran 4 weiter gegen den Sitz 12 gedrückt. Gleichzeitig fliesst Flüssigkeit über die einstellbare Referenzdrossel 8 in den Ringraum 38, wo sich ein Druck P2 einstellt und von diesem Raum in den Innenraum 39 innerhalb des Sitzes 12 über die Oeffnungen zwischen dem Deckel 11 und Sitz 12, wo sich dann zunächst ein Druck P3 einstellt. Die durch die Drücke P2 und P3 auf die Membran 4 einwirkenden Kräfte wirken der durch den Druck P1 bedingten Kraft entgegen, bis sich die als Druckwaage wirkende Membran 4 so einstellt, dass die Aenderungen des Druckgefälles P2-P3 der Aenderung von P1-P3 entspricht und damit das Druckgefälle P1-P2 an der Einstelldrossel annähernd konstant bleibt. Der Differenzdruck P2-P3 bestimmt aber einen Störfaktor, so dass die genannte Druckdifferenz, wenn sie einen die Durchflusstoleranzen überschreitenden Wert erreicht, weiter reduziert werden muss. Hierzu dient das weitere Regelglied 16. Bei diesem ist der Referenzdruck variabel, weil es vom vorangehenden Regelglied 6 den Differenzdruck P2 - P3 als Steuerbasis hat. Die sich über das Ventil 16 einstellende Druckdifferenz P3 - P4 ist dann geringer, so dass eine ausreichende Durchflusskonstanz erreicht werden kann. Im allgemeinen reichen zwei Regelglieder einer Kaskade. In Sonderfällen können auch weitere Regelglieder hinter dem Regelglied 16 angeordnet werden.

Erfindungsgemass wird durch die zwei- oder mehrstufige Anordnung von Regelgliedern ein sehr genauer, langzeitstabiler, verschmutzungsunempfindlicher und kompakter Volumenstromregler geschaffen, der in einem weiten Wirkdruckbereich arbeiten kann. Durch die einstellbare Drossel 8,37 ist die Solldurchflussmenge wählbar.

Zur Abhaltung allfälliger gröberer Verunreinigungen in Heizwasser kann am Einlass ein auswechselbares Filter, z. B. ein Bronzegitter von 0,2 mm Maschenweite, angebracht werden. Feine Verunreinigungen beeinträchtigen die Funktion des Volumenstromreglers nicht.

Die Membranen 4,14 sind vorzugsweise im wesentlichen flach ausgebildet, d. h. sie weisen eine relativ kleine Walkzone M und eine dazwischen liegende relativ grosse Stützfläche (mit Deckel) auf. Ueberdies sollen die Membranen eine sehr geringe Eigensteifigkeit von vorzugsweise weniger als drei Gramm/cm2 Membranfläche und einen grossen Hubbereich aufweisen. Dazu eignen sich vor allem Rollmembranen, Sickenmembranen oder gestauchte Flachmembranen. Als Material geeignet sind beispielsweise die unter dem Warenzeichen bekannten Materialien EPDM und Viton mit Härten von 55-70° Shore und Dicken von beispielsweise 0,2-0,4 mm. Falls mit hohen Ueberdrücken gerechnet werden muss, können allfällig davon betroffene Membranen auch mit einer Gewebeeinlage verstärkt werden.

Die besten Resultate werden mit möglichst grossen Membranflächen erreicht, deshalb soll der Membrandurchmesser vorzugsweise mindestens 70 % des Patronendurchmessers, bzw. des Innendurchmessers von Gehäuse 31 betragen. Die Oeffnungen der Ventilsitze 12,22 sollen einerseits zur Erreichung einer hohen Regelgenauigkeit relativ klein sein und andererseits soll aber der Strömungswiderstand am Ventil auch nicht zu gross werden. Gute Resultate können deshalb erreicht werden, wenn die Auslassöffnung der Regelglieder zwischen 35 und 45 % des Membrandurchmessers beträgt.

Um die erwünschten hohen Durchflussmengen und geringen Schwellwerte des Wirkdruckes zu erreichen, sollen weiter die Strömungswiderstände klein gehalten werden. Dazu werden bei gegebenem Gehäusedurchmesser die Dimensionen von Membran und Zu- und Abflusskanälen gross gehalten und die Wandstärken inklusive der Wandstärken W für den Einspannbereich der Membranen klein gehalten. Dazu kann die Membran statt wie in Figur 5 gezeigt mit einem Wulst auch in einer dünnen Wand W direkt eingeklemmt, eingeklebt oder aufvulkanisiert werden. Auf dem ganzen Strömungsweg durch den Volumenstromregler sollen mit Ausnahme der notwendigen scharfen Blenden die Begrenzungen ohne Kanten und Ecken, möglichst glatt, rund und kontinuierlich ausgeführt werden. Anstelle der konzentrischen Zuführ- und Abführkanäle 50 und 53 mit den Durchmessern V und R kann auch eine radiale Unterteilung vorgesehen werden, so dass also die Kanäle 50 und 53 im Schnitt von Figur 5 nicht nebeneinander, sondern hintereinander angeordnet wären. Die Form des äusseren Gehäuses 31 kann aber auch quadratisch ausgeführt werden, wobei dann in den Ecken, welche nicht von den kreisförmigen Membranen bedeckt werden, Platz vorhanden ist für die Kanäle 50 und 53. Mit Ausführungen des Volumenstromreglers gemäss den erläuterten konstruktiven Richtlinien können folgende sehr gute Resultate z. B. für ein 3/8 Zoll-Ventil und Normanschlüssen erreicht werden :

- Schwellwerte des Wirkdrucks von weniger als 0,1 bar

- Volumenströme von mindestens 200 l/h und

- Genauigkeiten von 2 % über einen sehr weiten Wirkdruckbereich bis zu Drücken von über 1 bar (1 Zoll = 2,54 cm).

Je nach gewünschter Anwendung kann die Konstruktion gemäss den angegebenen Richtlinien optimiert werden.

Bei der Materialwahl ist überdies darauf zu achten, dass die verschiedenen Elemente elektrochemisch und chemisch resistent sind, d. h. dass sie im Fluidstrom und im Bezug auf die umgebenden Gehäuse und Leitungen chemisch nicht reagieren, dass z. B. in einem Messinggehäuse die Ventilfedern 13 und 23 aus Federbronze bestehen oder aus säurefestem Stahl.

Anstelle der Ringfedern von Figur 5 können auch andere Federn wie Blattfedern oder Drehfedern eingesetzt werden. Vorteilhaft sind vor allem auch die kompakten Tellerfedern, welche eine geringe Bauhöhe des Gehäuses und kurze Verbindungskanäle ermöglichen. Es kann die Feder aber im Prinzip auch in die Membran integriert werden.

Abhängig davon, ob der Strömungsmelder 58 ein Strömen feststellt oder nicht, wird die Temperaturdifferenz der Thermofühler 109, 118 gemessen und in der Elektronikeinheit 117 mit der codierten Einstellung der Durchflussmenge über die Drossel 8 multipliziert und über die Oeffnungszeit des Ventilsystems 61 integriert bzw. aufsummiert, dass der summierte Energieverbrauch relativ oder in absoluten Werten über die Anzeige 112 angezeigt werden kann (Figur 3). Die elektronische Verarbeitung geschieht beispielsweise unter Verwendung von in Reihe geschalteten Stromsensoren (wie LM 234), welche dann ein der Temperaturdifferenz proportionales Stromsignal abgeben, welches über einen Kondensator in Impulse gewandelt bzw. über A/D-Wandler weiterverarbeitet und aufsummiert wird.

## Patentansprüche

1. Vorrichtung zum Messen der von einem Heizkörper (107) an einen Raum abgegebenen Wärmemenge und zum gleichzeitigen Steuern des den Heizkörper durchströmenden, als Wärmeträger dienenden Fluidstromes zwecks Regelung der Raumtemperatur, bestehend aus einem Volumenstromregler (1) zum Durchlassen eines konstanten Fluidstromes und einem von einem Signalgeber, z. B. einem Raumthermostaten (114), über ein Steuerventil (77) vorgesteuerten und von der Energie des Fluidstromes geschalteten Auf-Zu-Ventils (62) zum Sperren oder Durchlassen des Fluidstromes, sowie je einem Temperaturfühler (118, 109) für den Vor- und Rücklauf des Heizkörpers (107) und ferner einer Elektronikeinheit (78, 117), die die abgegebene Wärmemenge durch Integration der in eine elektrische Grösse umgewandelten jeweiligen Temperaturdifferenz während der Oeffnungszeiten des Auf-Zu-Ventils (62) erfasst, dadurch gekennzeichnet, dass der Volumenstromregler (1) mindestens zwei in Kaskade geschaltete Regelglieder (6, 16) umfasst, von denen jedes eine Steuerkammer (34, 44) und eine von dieser durch eine unter Federdruck stehende Membran (4, 14) getrennte, vom Fluidstrom durchflossene Durchflussregelkammer (38, 48) mit einem von der momentanen Auslenkung der Membran abhängigen Durchflussquerschnitt aufweist, wobei die Fluidzuführleitung (2″) einerseits direkt mit der Steuerkammer (34) des ersten Regelgliedes (6) und andererseits über Mittel (8) zur Druckabfallerzeugung mit dem Eingang der Durchflussregelkammer (38) des ersten Regelgliedes (6) und der Steuerkammer (44) des zweiten Regelgliedes (16) verbunden ist und dass dem Steuerventil (77) des Auf-Zu-Ventils (62) ein bistabiles Stellglied (63) zugeordnet ist, welches den Ventilkörper (81) des Steuerventils (77) über ein nur eine minimale elektrische Energie benötigendes elektromagnetisches Schaltglied (79) umschaltet, das mit dem Signalgeber (113, 114) und der Elektronikeinheit (78, 117) verbunden ist.

2. Vorrichtung nach Anspruch 1, dadurch gekennzeichnet, dass das Auf-Zu-Ventil als Membranventil (62) mit einer Membrane (64) ausgebildet ist, das zusammen mit den beiden Regelgliedern (6, 16) des Volumenstromreglers (1) hintereinander in einem gemeinsamen Durchflussgehäuse (31, 102) für den Fluidstrom angeordnet ist.

3. Vorrichtung nach einem der Ansprüche 1 und 2, dadurch gekennzeichnet, dass die vom Volumenstromregler (1) durchgelassene Durchflussmenge mittels einer veränderbaren oder auswechselbaren Drossel (8) einstellbar ist, wobei die eingestellte Durchflussmenge des Fluids in der Elektronikeinheit (117) zwangsweise oder durch Einstellung in kodierter Form bei der Durchführung der Wärmemengenmessung berücksichtigt wird.

4. Vorrichtung nach einem der Ansprüche 1 bis 3, dadurch gekennzeichnet, dass die Druckdifferenz zumindest an einem der Regelglieder (16) des Volumenstromreglers (1) durch das in Reihe vor diesem angeordnete Regelglied (6), welches als Drossel wirkt, gebildet wird.

5. Vorrichtung nach einem der Ansprüche 1 bis 4, dadurch gekennzeichnet, dass die Regelglieder (6, 16) des Volumenstromreglers (1) und das als Membranventil ausgebildete Auf-Zu-Ventil (62) mit dem Steuerventil (77) und dem bistabilen Stellglied (63) zu einer kompakten Ventilbaueinheit (102) zusammengefasst sind, die mit den normalen Heizkörperanschlüssen (104) versehen ist und anstelle eines herkömmlichen Heizkörperventils in die Heizkörperleitung (106) einbaubar ist, wobei die Ventilbaueinheit (102) einen Ventilgehäuseaufsatz (103) trägt, in dem die Elektronikeinheit (117) und die Anzeige sowie Einstell- bzw. Vorgabeelemente (112, 113) untergebracht sind.

6. Vorrichtung nach einem der Ansprüche 1 bis 5, dadurch gekennzeichnet, dass die Regelung des Fluidstromes und damit der Raumtemperatur über einen das Oeffnen und Schliessen des Auf-Zu-Ventils (62) auslösenden einstellbaren Thermostaten (113, 114) erfolgt, der mit einer Regeleinrichtung (78) der Elektronikeinheit (117) in Verbindung steht.

7. Vorrichtung nach Anspruch 6, dadurch gekennzeichnet, dass die Führungsgrösse oder der Sollwert des Thermostaten (113, 114) über die Zeit hin gemäss vorgegebener Werte automatisch veränderbar ist.

8. Vorrichtung nach einem der Ansprüche 1 bis 7, dadurch gekennzeichnet, dass zur Energieversorgung Solarzellen oder Halbleiterthermoelemente, z. B. Peltier-Elemente zur Umwandlung der im Fluidstrom gespeicherten Energie in elektrische Energie vorgesehen sind.

9. Vorrichtung nach einem der Ansprüche 1 bis 8, dadurch gekennzeichnet, dass ein Strömungsmelder (58) zur Abgabe eines eine Strömung oder den Fluidstillstand anzeigenden Signals an die Elektronikeinheit (117) vorgesehen ist, der die Integration der Temperaturdifferenzwerte der Temperaturfühler (109, 118) auslöst und wieder stoppt.

10. Vorrichtung nach Anspruch 9, dadurch gekennzeichnet, dass der Strömungsmelder (58) als ein einem Regelglied (6, 16) zugeordneter berührungsloser Schalter ausgebildet ist.

11. Vorrichtung nach Anspruch 10, dadurch gekennzeichnet, dass der Strömungsmelder (58) als ein dem Auf-Zu-Ventil (62) zugeordneter berührungsloser Schalter ausgebildet ist.

12. Vorrichtung nach einem der Ansprüche 1 bis 11, dadurch gekennzeichnet, dass die den Druckunterschied beiderseits der Membran (4) des Membranventils (6) bedingende Drossel (8) des Volumenstromreglers (1) als scharfe Blende ausgebildet ist.

13. Vorrichtung nach einem der Ansprüche 1 bis 12, dadurch gekennzeichnet, dass die Membranen (4, 14, 64) des Volumenstromreglers (1) und des Auf-Zu-Ventils (62) im wesentlichen flach und mit geringer Steifigkeit ausgebildet sind, wobei die Membranflächen den Querschnitt des Gehäuses (31) zum grössten Teil überdecken.

14. Vorrichtung nach einem der Ansprüche 1 bis 13, dadurch gekennzeichnet, dass die Halteglieder für das bistabile Stellglied (63) des Steuerventils (77) für das Auf-Zu-Ventil (62) als Permanentmagnet (91), als Hilfsfeder (83) und/oder als Schnappfeder augebildet sind.

15. Vorrichtung nach einem der Ansprüche 1 bis 14, dadurch gekennzeichnet, dass ein beweglicher Anker (82) des bistabilen elektromagnetischen Schaltgliedes (79) fest mit einem durch eine Hilfsfeder (83) in Schliessrichtung belasteten Ventilverschlusskörper (81) des Steuerventils (77) verbunden ist und ausserdem ein Permanentmagnet (91) als Halteglied für die Offenstellung des Ventilverschlusskörpers (81) am Gehäuse (31) angeordnet ist.

16. Vorrichtung nach einem der Ansprüche 1 bis 15, dadurch gekennzeichnet, dass im Auf-Zu-Ventil (62) eine blendenartige Oeffnung (65) zum Verbindungsraum (55) des Steuerventils (77) vorgesehen ist und dieser Oeffnung (65) ein Filter (66) vorgeschaltet ist.

17. Vorrichtung nach Anspruch 16, dadurch gekennzeichnet, dass das Flächenverhältnis von Durchlass (76) des Steuerventils (77) zur blendenartigen Oeffnung (65) des Auf-Zu-Ventils (62) zwischen 5 und 10 liegt.

18. Vorrichtung nach einem der Ansprüche 1 bis 17, gekennzeichnet durch einen injektorartigen Anschluss (67), der vom Steuerraum (54) in den Abfluss (53) des Hauptstromes führt.

19. Vorrichtung nach einem der Ansprüche 1 bis 18, dadurch gekennzeichnet, dass die Regelglieder (6, 16) und das Auf-Zu-Ventil (62) einen zentral an den Membranen (4, 14, 64) vorgesehenen Ventildeckel (11, 21, 71) tragen, denen ein im Querschnitt ringförmiger Ventilsitz (12, 22, 72) zugeordnet ist, wobei auf die Membrandeckel (11, 21, 71) eine Feder (13, 23, 73) wirkt.

20. Vorrichtung nach einem der Ansprüche 1 bis 19, dadurch gekennzeichnet, dass die Membranen (4, 14, 64) aus einem resistenten Material, wie beispielsweise unter dem Warenzeichen EPDM oder VITON bekannt, bestehen und eine geringe Eigensteifigkeit von weniger als 3 g/cm$^2$ Membranfläche aufweisen.

21. Vorrichtung nach einem der Ansprüche 1 bis 20, dadurch gekennzeichnet, dass die Membranen (4, 14) an ihrem Umfang mittels eines Wulstes oder durch Einkleben oder Aufvulkanisieren dicht eingespannt sind und die auf die Membranen wirkenden Federn (13, 23) nur in ihrem Proportionalbereich beansprucht sind und dass sie elektrochemisch resistent sind.

## Claims

1. Device for measuring the heat quantity delivered by a radiator (107) and for controlling the fluid flow through the radiator for the purpose of regulating the room temperature, the device comprising a volume flow regulator (1) for allowing the passage of a constant fluid flow and having a signal generator, for example a room temperature thermostat (114), a control valve (77), an on-off valve (62) precontrolled by said signal generator (114), via said control valve (77) and switched by the energy of the fluid stream to interrupt or allow the passage of the fluid stream, temperature sensors (118, 109) sensing the inlet and outlet to and from the radiator (107) respectively and an electronic unit (78, 117) which determines the quantity of heat by integration of a temperature differential converted into electrical units during opening times of said on-off valve (62), characterised by the volume flow regulator (1) comprising at least two cascaded regulating members (6, 16), each of which possesses a control chamber (34, 44) and a flow regulating chamber (38, 48) through which the fluid stream flows, separated from the control chamber (34, 44) by a spring loaded diaphragm (4, 14), the flow rate of the fluid stream depending on the momentary deflection of the diaphragm (4, 14), whereby the fluid supply channel (2″) is connected on the one hand directly with the control chamber (34) of the first regulating member (6) and on the other hand through means (8) for producing a pressure drop, with the inlet of the flow regulating chamber (38) of the first regulating member (6) and the control chamber (44) of the second regulating member (16) and that a bistable actuating member (63) is related to the control valve (77) for the on-off valve (62) controlling the position of the valve body (81) of the control valve (77) by means of an electromagnetic switching member (79) requiring only minimal electrical energy, being connected to the signal generator (113, 114) and the electronic unit (78, 117).

2. Device as defined in claim 1, characterised in that the on-off valve is formed as a diaphragm valve (62) with a diaphragm (64) and being arranged together with the cascaded regulating members (6, 16) of the volume flow regulator (1) one behind the other in one common throughflow housing (31, 102).

3. Device as defined in claims 1 and 2, characterised in that the rate of flow passing the volume flow regulator (1) is adjustable by means of a variable and exchangeable throttle (8), whereby the adjusted rate of flow of the fluid stream is taken into account for the measurement of the heat quantity in the electronic unit (117) either positively or by coded setting.

4. Device as defined in claim 1 to 3, characterised in that the regulating members (6, 16) of the volume flow regulator (1) are arranged so that a pressure difference is formed at one of the regulating members (16) by the other regulating member (6) and operating as a throttle.

5. Device as defined in claim 1 to 4, characterised in that the on-off valve formed as a diaphragm valve (62), the regulating members (6, 16) of the volume flow regulator (1), the control valve (77) and the bistable actuating member (63) are assembled together so as to form a compact valve unit (102), the radiator (107) having a radiator conduit (106), the valve unit (102) being provided with radiator connections (104) and arranged in the radiator conduit (106) instead of a conventional radiator valve, the valve unit (102) carrying an auxiliary housing (103) which accommodates the electronic unit (117), and further comprising indicating, adjusting and presetting elements (112, 113), also accommodated in the auxiliary housing (103).

6. Device as defined in one of the claims 1 to 5, characterised in that the electronic unit (117) has a regulating device (78), the said signal Generator being formed as a thermostat (113, 114) controlling the opening and closing of the on-off valve (62) regulating the fluid flow and thereby the room temperature, said thermostat (113, 114) being connected with the regulating device (78) of the electronic unit (117).

7. Device as defined in claim 6, characterised in that the command value or nominal value from the thermostat (113, 114) is automatically changeable over time in accordance with a predetermined value.

8. Device as defined in claims 1 to 7, characterised in that the device comprises energy supply means formed as solar cells or semiconductor elements, for example Peltier-elements, for converting the energy of the fluid stream into electrical energy.

9. Device as defined in claims 1 to 8, characterised in that it comprises a flow indicator (58) for delivering a signal indicating a fluid flow or interruption to said electronic unit (117), which starts and stops integration of the temperature difference values of the temperature sensors (109, 118).

10. Device as defined in claim 9, characterised in that the flow indicator (58) is in the form of a contactless switch associated with one of the regulating members (6, 16).

11. Device as defined in claim 10, characterised in that the flow indicator (58) is in the form of a contactless switch associated with the on-off valve (62).

12. Device as defined in one of the claims 1 to 11, characterised in that the volume flow regulator (1) has a throttle (8) which provides a pressure difference between both sides of the diaphragm (4) of the regulating member (6) and is formed as a sharp aperture.

13. Device as defined in claims 1 to 12, characterised in that the housing (31) has a predetermined cross section, the diaphragms (4, 14, 64) of the volume flow regulator (1) and of the on-off valve (62) being substantially flat and having a low stiffness and a large diaphragm surface overlapping a greater part of said cross section of the housing (31).

14. Device as defined in claims 1 to 13, characterised in that the holdding members for the bistable adjusting member (63) of the control valve (77) for the on-off valve (62) are formed as a permanent magnet (91), an auxiliary spring (83) and/or a snap spring.

15. Device as defined in claims 1 to 14, characterised in that the control valve (77) has a valve closing body (81) loaded in a closing position by the auxiliary spring (83), and further comprising a bistable electromagnetic switching member (79) which has a movable armature fixedly connected with the valve closing body (81), and a permanent magnet (91) forming a holding member for the valve closing body (81) in an open position.

16. Device as defined in claims 1 to 15, characterised in that the control valve (77) has a connecting chamber (55) the on-off valve (62) having an aperture (65) to the connecting chamber (55) of the control valve (77), and further comprising a filter arranged upstream of the aperture (65).

17. Device as defined in claim 16, characterised in that the control valve (77) has a through passage (76) with a surface ratio relative to the aperture (65) of the on-off valve (62) between 5 and 10.

18. Device as defined in one of the claims 1 to 17, characterised in that it comprises a control chamber (54), a discharge (53), and an injection-like connection (67) which leads from the control chamber (54) to the discharge (53).

19. Device as defined in one of the claims 1 to 18, characterised in that a valve cover (11, 21, 71) is provided on the diaphragms (4, 14, 64) of each of the regulating members (6, 16), a ring shaped valve seat (12, 22, 72) associated with the valve cover (11, 21, 71), and a spring (13, 23, 73) acting on the valve cover (11, 21, 71).

20. Device as defined in claims 1 to 19, characterised in that the diaphragms (4, 14, 64) are ccmposed of a resistant material as for example known under the trade mark EPDM or VITON, and have low stiffness of less than 3 g/cm$^2$ of a diaphragm surface.

21. Device as defined in one of the claims 1 to 20, characterised in that the diaphragms (4, 14) have a peripherial region and are reliably and tightly clamped in said peripherial region, and further comprising springs (13, 23) acting on said diaphragms, the springs (13, 23) being strained only in their proportional range and being electrochemically resistant.

## Revendications

1. Dispositif de mesure de la quantité de chaleur délivrée par un radiateur (107) dans une pièce et de la commande du débit de fluide à travers le radiateur, le fluide servant comme porteur de chaleur, pour régler la température dans cette pièce, le dispositif impliquant un régulateur de débit (1) pour un débit constant, un capteur thermique, par exemple un thermostat (114) pour mesurer la température ambiante d'une pièce, une soupape pilote (77), une soupape directe d'ouverture et de fermeture (62) précontrôlée par le capteur thermique (114), via la soupape pilote (77) et commutée par l'énergie du courant de fluide pour interrompre ou laisser passer le courant de fluide, sondes de mesure (118, 109) de la température du fluide à l'entrée et à la sortie du radiateur (107) et en outre un dispositif électronique (78, 117) pour déterminer la quantité de chaleur délivrée, par intégration d'une différentielle de température transformée en signaux électriques pendant le temps d'ouverture de la soupape (62), caractérisé par le régulateur de débit (1) impliquant au moins deux membres de régulation (6, 16) arrangés en cascade, chacun muni d'une chambre de contrôle (34, 44) et d'une chambre de régulation du flux (38, 48), séparée de la chambre de contrôle (34, 44) par un diaphragme chargé par ressort (4, 14), le débit du fluide dépendant de la déflection momentanée du diaphragme (4, 14), cependant que le canal d'alimentation de fluide (2″) est relié d'une part directement avec la chambre de contrôle (34) du premier membre de régulation (6) et d'autre part par des moyens (8) produisant une chute de pression, avec l'entrée de la chambre de régulation de flux (38) du premier membre de régulation (6) et la chambre de contrôle (44) du deuxième membre de régulation (16), et qu'un membre d'activation bistable (63) est coordonné à la soupape pilote (77) pour la soupape directe d'ouverture et de fermeture (62) contrôlant la position du corps de valve (81) de la soupape pilote (77) par l'intermédiaire d'un membre de commutation électromagnétique (79) ayant besoin seulement d'un minimum d'énergie électrique, le tout étant relié au capteur thermique (113, 114) ainsi qu'au dispositif électronique (78, 117).

2. Dispositif selon la revendication 1, caractérisé en ce que la soupape directe d'ouverture et de fermeture est formée comme valve à diaphragme (62) avec un diaphragme (64), et que la soupape (62) est disposée ensemble avec les deux membres de régulation (6, 16) du régulateur du débit (1), l'un derrière l'autre dans un commun boîtier (31, 102) pour le passage du fluide.

3. Dispositif selon une des revendications 1 et 2, caractérisé en ce que le débit passant à travers le régulateur de débit (1) est réglable par l'intermédiaire d'un étrangleur interchangeable ou variable (8) d'où l'on tient compte obligatoirement du débit réglé dans l'unité électronique (117) ou du réglage en forme de code lors des mesures de la quantité de chaleur.

4. Dispositif selon une des revendications 1 à 3, caractérisé en ce que la différence de pression se forme au moins à un des membres de régulation (16) du régulateur de débit (1) disposé en une rangée et qui fonctionne comme réduction.

5. Dispositif selon une des revendications 1 à 4, caractérisé en ce que les membres de régulation (6, 16) du régulateur de débit (1) ainsi que la soupape d'ouverture et de fermeture (62) formés d'une soupape à diaphragme avec la soupape pilote (77) et la soupape (62) sont réunis en une soupape d'unité modulaire (102), cette soupape d'unité modulaire étant munie d'un raccord ordinaire (104) et peut être montée en lieu et place d'une soupape conventionnelle sur la conduite du corps de chauffe (106), tenant compte du fait que la soupape d'unité modulaire (102) est pourvue d'un boîtier (103) qui contient l'unité électronique (117) ainsi que les éléments de signalisation et d'introduction (112, 113).

6. Dispositif selon une des revendications 1 à 5, caractérisé en ce que le réglage du débit de fluide et de la température de la pièce est effectué par le déclenchement d'un thermostat variable (113, 114) qui ouvre ou ferme la soupape (62), le thermostat (113, 114) étant relié au système régulateur (78) de l'unité électronique (117).

7. Dispositif selon la revendication 6, caractérisé en ce que la quantité de commande ou nominal du thermostat (113, 114) est variable automatiquement en fonction du temps, selon des valeurs prédéfinies.

8. Dispositif selon une des revendications 1 à 7, caractérisé en ce que pour l'alimentation électrique des cellules solaires ou des couples thermoélectriques, par exemple des éléments Peltier pour la transformation de l'énergie thermique du fluide en énergie électrique.

9. Dispositif selon une des revendications 1 à 8, caractérisé en ce que la consigne du signal à l'unité électronique 117, sur l'état de l'écoulement, stationnaire ou en mouvement est prévue à l'aide d'un capteur de courant (58), ce signal déclenchant ou arrêtant l'intégration de la différence de température des sondes (109, 118).

10. Dispositif selon revendication 9, caractérisé en ce que le capteur de courant (58) correspondant à un membre de régulation (6, 16) se développe comme un commutateur sans attouchement.

11. Dispositif selon la revendication 10, caractérisé en ce que le capteur de courant (58) correspondant à un élément de la soupape d'ouverture et de fermeture (62) se développe comme un commutateur sans attouchement.

12. Dispositif selon une des revendications 1 à 11, caractérisé en ce que la différence de pression des deux côtés de la membrane 4 du membre de régulation (6) conditionnée par la réduction (8) du régulateur de débit (1) se développe comme un obturateur très précis.

13. Dispositif selon une des revendications 1 à 12, caractérisé en ce que les membranes (4, 14, 64) du régulateur de débit (1) et de la soupape d'ouverture et de fermeture (62) se développent avec peu de rigidité et sont essentiellement planes d'où la surface des membranes recouvre la plus grande partie de la section du boîtier (31).

14. Dispositif selon une des revendications 1 à 13, caractérisé en ce que les éléments de support pour le vérin bistable (63) de la soupape pilote (77) et pour la soupape d'ouverture et de fermeture (62) se développent comme aimant permanent (91), comme ressort compensateur (83) ou/et comme ressort à déclic.

15. Dispositif selon une des revendications 1 à 14, caractérisé en ce qu'un rotor mobile (82) de l'élément bistabile de commutation électromagnétique (79) est solidement relié à une soupape de fermeture (81), est relié un aimant permanent (91), comme élément de retenue au boîtier (31).

16. Dispositif selon une des revendications 1 à 15, caractérisé en ce qu'il est prévu une sorte d'ouverture en diaphragme (65) dans la soupape pilote (77) et couplé en série avec cette ouverture (65) un filtre (66).

17. Dispositif selon la revendication 16, caractérisé en ce que le rapport des sections de passage (76) de la soupape pilote (77) à l'ouverture en forme de diaphragme (65) de la soupape d'ouverture et de fermeture (62) doit être compris entre 5 et 10.

18. Dispositif selon une des revendications 1 à 17, caractérisé en ce qu'une sorte d'injection de distribution (67) est prévue qui conduit du régulateur (54) dans la voie d'écoulement (53) du fluide principal.

19. Dispositif selon une des revendications 1 à 18, caractérisé en ce que les membres de régulation (6, 16) et la soupape d'ouverture et de fermeture (62) portent une soupape couvercle (11, 21, 71), prévue à la membrane (4, 14, 64) et attribuée à ces éléments, vu dans une coupe transversale, un siège à soupape (12, 22, 72) en forme de cercle à quoi il faut préciser qu'un ressort (13, 23, 73) influence la soupape couvercle (11, 21, 71).

20. Dispositif selon une des revendications 1 à 19, caractérisé en ce que les membranes (4, 14, 64) sont composées d'un matériel très résistant, comme par exemple connu sous la marque de EPDM ou VITON, et représentent des propriétés de contraintes minimes de l'ordre de 3 g/cm² de surface de membrane.

21. Dispositif selon une des revendications 1 à 20, caractérisé en ce que les membranes (4, 14) sont tendues hermétiquement à leur circonférence au moyen d'un coussinet ou par collage ou par vulcanisation et que les ressorts (13, 23) qui chargent les membranes sont sollicités seulement proportionnellement à leur domaine et sont électrochimiquement résistants.

Fig. 1

Fig.2

1

Fig. 3

Fig. 4

Fig. 5

Fig. 6